# EUROPEAN PATENT APPLICATION

(11) **EP 3 617 759 A1**
(43) Date of publication of application: **04.03.2020**
(21) Application number: 18791871.9
(22) Date of filing: 23.02.2018
(51) Int. Cl.: G02B 6/26, G02B 6/43

(54) **OPTICAL RECEIVER AND OPTICAL COMMUNICATION DEVICE**

(30) Priority: 27.04.2017 JP 2017088309
(71) Applicant: Nippon Sheet Glass Company, Limited, Tokyo 108-6321 (JP)
(72) Inventor: TSUNETOMO, Keiji, Tokyo 108-6321 (JP); KUSAKA, Satoru, Tokyo 108-6321 (JP)
(74) Representative: Algemeen Octrooi- en Merkenbureau B.V.
(86) International application number: PCT/JP2018/006756
(87) International publication number: WO 2018/198511

(57) **Abstract**

An optical receiver 20 is an optical receiver that receives, through a light receiving element 21, a light beam having a spiral wavefront propagated through a multimode fiber 30. The optical receiver 20 includes a reception side vortex optical element 24 arranged between the multimode fiber 30 and the light receiving element 21.

## Description

### [TECHNICAL FIELD]

The present invention relates to optical receivers and optical communication devices.

### [BACKGROUND ART]

The volume of data communication has increased explosively because of the widespread use of the Internet and cloud services. It has also become necessary to exchange a large volume of data at a high speed in a data center built to store data temporarily or to make Internet connections.

For short-range (10 m-1000 m) transmission such as that performed within a data center, optical communication is advantageous for the purpose of high-speed communication, although communication based on electrical signals is performed as well. Systems offering a transmission speed of several GHz-10 GHz built by a combination of a surface-emitting light source such as a vertical cavity surface emitting laser (VCSEL) and a multimode fiber have already been available for short-range optical communication.

Since a multimode fiber is designed such that the core where light travels is larger than that of a single-mode fiber, the light may be transmitted in a large number of modes within the core, producing differential modal dispersion (DMD). DMD degrades optical waveforms easily and so may restrict the transmission distance.

A method using a vortex phase plate for generating an optical vortex is known as a method for reducing DMD in a multimode fiber (e.g., patent document 1 or 2). Normally, light emitted from a laser presents a basic Gaussian light intensity distribution in which the intensity at the center is higher. A Gaussian light beam transmitted through a vortex phase plate can be transformed into a light having a ring-shaped light intensity distribution in which the intensity at the central part is zero or reduced. A vortex phase plate is, for example, an optical element shaped in a plate in which a continuous or step-like spiral profile (vortex profile) is formed on at least one of the principal surfaces.

As is well known, the refractive index distribution in the central part of the core of a multimode fiber may be unstable, depending on the manufacturing method. This instability could be a factor to cause an increase in DMD (e.g., patent document 1 or 2). This is addressed by transmitting the light emitted from a laser through a vortex phase plate and transforming the light into a light having a ring-shaped light intensity distribution before causing the light to enter the multimode fiber. This inhibits the light from being directly incident on the central part of the core of the multimode fiber and inhibits the occurrence of DMD because the light is propagated within the fiber mainly in a so-called high-order propagation mode.

[patent document 1] Japanese Patent Application Publication NO. 2008-46312
[patent document 2] Japanese Patent Application Publication NO. 2016-91014

### [DISCLOSURE OF THE INVENTION]

### [PROBLEM TO BE SOLVED BY THE INVENTION]

However, when light propagated through a multimode fiber is received by a light receiving element such as a photodiode (PD) or an avalanche photodiode (APD) in an optical receiver, if the light emitted from the multimode fiber has a ring-shaped light intensity distribution, the light intensity at the center is extremely low. Thus, the amount of light received by the light receiving element may be low, and an electrical signal obtained after photoelectric conversion may also be small.

It is possible to increase the amount of received light by increasing the area of the light receiving surface of the light receiving element. However, there is a problem that the response speed of the light receiving element becomes slow, making it difficult to read high speed signals if the area of the light receiving element is increased too much.

In this background, a purpose of the present invention is to provide a technology capable of efficiently receiving a light beam having a spiral wavefront propagated through a multimode fiber.

### [MEANS TO SOLVE THE PROBLEM]

An optical receiver according to one embodiment of the present invention is an optical receiver that receives, through a light receiving element, a light beam having a spiral wavefront propagated through a multimode fiber and includes a vortex optical element arranged between the multimode fiber and the light receiving element.

The light beam propagated through the multimode fiber may be a light beam having a wavefront rotated spirally in a first direction around the propagation direction. The vortex optical element may be formed so as to spirally rotate the wavefront of an incident light beam in a second direction that is opposite to the first direction around the propagation direction.

The light beam propagated through the multimode fiber may be a light beam having a wavefront to which a predetermined phase difference is given in the first direction around the propagation direction. The vortex optical element may be formed so as to give a predetermined phase difference to the wavefront of an incident light beam in the second direction that is opposite to the first direction around the propagation direction.

Another embodiment of the present invention relates to an optical communication device. This device includes: an optical transmitter that transmits, via a multimode fiber, a light beam emitted from a light source and that includes a transmission side vortex optical element arranged between the light source and the multimode fiber; and an optical receiver that receives, through a light receiving element, a light beam propagated through the multimode fiber and that includes a reception side vortex optical element arranged between the multimode fiber and the light receiving element.

The transmission side vortex optical element may be formed so as to spirally rotate the wavefront of an incident light beam in a first direction around the propagation direction. The reception side vortex optical element may be formed so as to spirally rotate the wavefront of an incident light beam in a second direction that is opposite to the first direction around the propagation direction.

The transmission side vortex optical element may be formed so as to give a predetermined phase difference to the wavefront of an incident light beam in the first direction around the propagation direction. The reception side vortex optical element may be formed so as to give a predetermined phase difference to the wavefront of an incident light beam in the second direction that is opposite to the first direction around the propagation direction.

Optional combinations of the aforementioned constituting elements, and implementations of the invention in the form of methods, apparatuses, and systems may also be practiced as additional modes of the present invention.

### [ADVANTAGE OF THE PRESENT INVENTION]

According to the present invention, a technology capable of efficiently receiving a light beam having a spiral wavefront propagated through a multimode fiber can be provided.

### [BRIEF DESCRIPTION OF THE DRAWINGS]

Fig. 1 is a schematic diagram for explaining an optical communication device according to an embodiment of the present invention;
Fig. 2 is a diagram for explaining a condition for an optical simulation;
Fig. 3 is a diagram showing a light intensity distribution when the phase difference of a transmission side vortex optical element is 2π;
Fig. 4 is a diagram showing a light intensity distribution when the phase difference of the transmission side vortex optical element is 2π×6;
Figs. 5A, 5B and 5C are diagrams showing a light intensity distribution when a light beam having the light intensity distribution shown in Fig. 3 is received by an optical receiver;
Figs. 6A, 6B and 6C are diagrams showing a light intensity distribution when a light beam having the light intensity distribution shown in Fig. 4 is received by the optical receiver;
Fig. 7 is a diagram showing the result of another optical simulation of the optical communication device according to the embodiment of the present invention; and
Fig. 8 is a diagram showing the result of another optical simulation of the optical communication device according to the embodiment of the present invention.

### [MODE FOR CARRYING OUT THE INVENTION]

The embodiment of the present invention is now described in the following. The same or equivalent constituting elements, members, and processes illustrated in each drawing shall be denoted by the same reference numerals, and duplicative explanations will be omitted appropriately. Further, the embodiment does not limit the invention and is shown for illustrative purposes, and all the features described in the embodiment and combinations thereof are not necessarily essential to the invention.

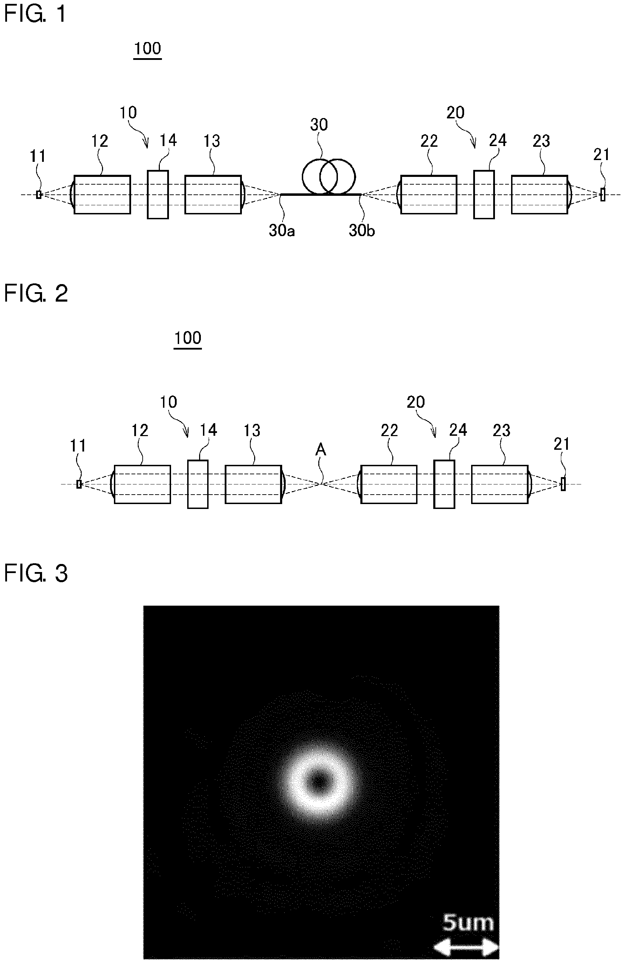

Fig. 1 is a schematic diagram for explaining an optical communication device 100 according to an embodiment of the present invention. As shown in Fig. 1, the optical communication device 100 includes an optical transmitter 10, an optical receiver 20, and a multimode fiber 30 connected to the optical transmitter 10 and the optical receiver 20. A light beam transmitted from the optical transmitter 10 propagates through the multimode fiber 30 and is received by the optical receiver 20.

The optical transmitter 10 includes a light source 11, a transmission side first lens 12, a transmission side second lens 13, and a transmission side vortex optical element 14. The optical transmitter 10 guides a light beam emitted from the light source 11 to the core of the multimode fiber 30 via the transmission side first lens 12, the transmission side vortex optical element 14, and the transmission side second lens 13.

The light source 11 may be, for example, a laser diode such as a vertical cavity surface emitting laser (VCSEL) or a distributed feedback (DFB) laser. As the wavelength of light, for example, 850 nm, 1310 nm, 1550 nm, or the like may be used. The wavefront of a light beam emitted from the light source 11 is substantially planar or substantially spherical. The light intensity distribution of the light beam is a basic Gaussian light intensity distribution in which the intensity at the center is high.

The transmission side first lens 12 converts the light beam from the light source 11 into a collimated light beam and emits the collimated light beam toward the transmission side vortex optical element 14. The transmission side vortex optical element 14 converts the light beam having a substantially planar or substantially spherical wavefront from the transmission side first lens 12 into a light beam having a spiral wavefront. As a result, the light intensity distribution of the light beam changes from a Gaussian light intensity distribution to a ring-shaped light intensity distribution. Details of the transmission side vortex optical element 14 will be described later. The transmission side second lens 13 condenses the light beam that has passed through the transmission side vortex optical element 14 and causes the light beam to enter through an incident end 30a of the multimode fiber 30.

The transmission side first lens 12, the transmission side vortex optical element 14, and the transmission side second lens 13 are arranged such that the respective optical axes thereof coincide with one another. Further, although the transmission side first lens 12, the transmission side vortex optical element 14, and the transmission side second lens 13 are shown as separate objects in Fig. 1, for example, the transmission side first lens 12 and the transmission side vortex optical element 14 may be integrally formed, the transmission side vortex optical element 14 and the transmission side second lens 13 may be integrally formed, or the transmission side first lens 12, the transmission side vortex optical element 14, and the transmission side second lens 13 may be integrally formed.

The optical receiver 20 includes a light receiving element 21, a reception side first lens 22, a reception side second lens 23, and a reception side vortex optical element 24. The optical receiver 20 receives, at the light receiving element 21, a light beam having a ring-shaped light intensity distribution propagated through the multimode fiber 30 via the reception side first lens 22, the reception side vortex optical element 24, and the reception side second lens 23.

The light receiving element 21 may be, for example, a photodiode (PD) or an avalanche photodiode (APD) such as Si, InGaAs, or the like. Si is suitable for the near infrared light reception, and InGaAs is suitable for the near infrared to infrared light reception. In general, the response speed of a light receiving element decreases as the light receiving area of the light receiving element increases. Therefore, when receiving a high-speed light signal, the one with a small light receiving area (for example, the diameter of the light receiving surface is about 10 µm) may be used.

The reception side first lens 22 converts the light beam emitted from an emission end 30b of the multimode fiber 30 into a collimated light beam and emits the collimated light beam toward the reception side vortex optical element 24. The reception side vortex optical element 24 converts the light beam having a spiral wavefront from the reception side first lens 22 into a light beam having a planar or spherical wavefront. As a result, the light intensity distribution of the light beam changes back to a Gaussian light intensity distribution from a ring-shaped light intensity distribution under a predetermined condition. Details of the reception side first lens 22 will be described later. The reception side second lens 23 condenses the light beam that has passed through the reception side vortex optical element 24 and causes the light beam to be incident on the light receiving surface of the light receiving element 21.

The reception side first lens 22, the reception side vortex optical element 24, and the reception side second lens 23 are arranged such that the respective optical axes thereof coincide with one another. Further, although the reception side first lens 22, the reception side vortex optical element 24, and the reception side second lens 23 are shown as separate objects in Fig. 1, for example, the reception side first lens 22 and the reception side vortex optical element 24 may be integrally formed, the reception side vortex optical element 24 and the reception side second lens 23 may be integrally formed, or the reception side first lens 22, the reception side vortex optical element 24, and the reception side second lens 23 may be integrally formed.

The transmission side vortex optical element 14 and the reception side vortex optical element 24 are optical elements including a continuous or step-like spiral profile (vortex profile). These vortex optical elements may be vortex phase plates in which a vortex profile is formed on at least one of the principal surfaces of the plate-like body.

The vortex profile is an optical element with a spiral surface formed continuously or in steps around the optical axis and has the function of generating an optical vortex, i.e., transforming the incident light into a light beam having a phase difference in the circumferential direction. When a light beam having a planar or spherical wavefront is incident on this vortex profile, the incident light is transformed into a light beam having a phase difference in the circumferential direction, and a light beam having a ring-like light intensity distribution is obtained.

In this specification, regarding the direction of rotation of the wavefront of an optical vortex or the direction of rotation of a spiral profile of a vortex profile, the direction in which the right-hand thread is turned to advance in the propagation direction of a light beam is referred to as the positive (+) direction and the reverse direction thereof is referred to as the negative (-) direction.

The phase difference Δϕ of a vortex profile is given by Δϕ=2π×m_{c}×Δn×d/λ, where d denotes the maximum step difference (the difference between the highest part and the lowest part of the vortex profile) in the vortex profile, m_{c} is referred to as a charge number and represents the number of repetitions (the number of cycles) of shapes having a step difference d per one circle in the vortex profile, A denotes the wavelength used, and Δn is the difference in refractive index at the used wavelength A between the material constituting the vortex profile and the surrounding medium.

Any of various types of the vortex profile may be used depending on the phase difference that should be given. For example, a profile that gives a phase difference of 2π in one circle (the charge number m_{c}=1, the phase difference Δϕ=2π), a profile that gives a phase difference continuously through 360°, a profile that gives a phase difference of 2π per 180° (m_{c}=2, Δϕ=2π×2), a profile that gives a phase difference of 2π per 120° (m_{c}=3, Δϕ=2π×3), or the like may be used. When the phase difference Δϕ is 2π×m (m is an integer), a light beam having a ring-shaped light intensity distribution with the highest axial symmetry around the central axis is obtained. m denotes the order of the vortex profile. The larger the absolute value of the phase difference of the vortex profile, the larger the beam diameter (ring diameter) of the light beam obtained. The term beam diameter refers to the maximum diameter at an intensity 1/e² of the maximum value in the light intensity distribution and corresponds to the ring diameter in the case of a ring-shaped beam.

In the optical communication device 100 according to the present embodiment, the transmission side vortex optical element 14 is formed so as to spirally rotate the wavefront of an incident light beam in the positive direction around the propagation direction. On the other hand, the reception side vortex optical element 24 is formed so as to spirally rotate the wavefront of an incident light beam in the negative direction around the propagation direction. That is, the transmission side vortex optical element 14 and the reception side vortex optical element 24 are formed so as to spirally rotate the wavefronts of the respective incident light beams in opposite directions. Alternatively, the wavefront of a beam may be spirally rotated in the negative direction around the propagation direction on the transmission side and in the positive direction around the propagation direction on the reception side.

The transmission side vortex optical element 14 is formed so as to give a predetermined phase difference Δϕ to the wavefront of an incident light beam in the positive direction around the propagation direction. On the other hand, the reception side vortex optical element 24 is formed so as to give a predetermined phase difference Δϕ to the wavefront of an incident light beam in the negative direction around the propagation direction. That is, the phase difference in the positive direction given by the transmission side vortex optical element 14 and the phase difference in the negative direction given by the reception side vortex optical element 24 have the same absolute value. Alternatively, a predetermined phase difference may be given in the negative direction around the propagation direction on the transmission side and in the positive direction around the propagation direction on the reception side.

Next, results of optical simulation of the optical communication device 100 formed as described above will be shown. Fig. 2 is a diagram for explaining a condition for the optical simulation.

The mode of a light beam emitted from the multimode fiber 30 to the optical receiver 20 is affected by the mode of a light beam that is emitted from the optical transmitter 10 and enters the multimode fiber 30 and the mode of propagation in the multimode fiber 30. The mode of propagation in the multimode fiber 30 may be affected by disturbances such as mode conversion during the propagation. However, for the sake of simplicity, a case is now considered where the mode of a light beam emitted from the optical transmitter 10 is also maintained through the propagation in the multimode fiber 30 and a light beam in a mode that is identical to the mode of the light beam emitted from the optical transmitter 10 is emitted toward the optical receiver 20 from the multimode fiber 30. An optical system under such conditions can be equivalently expressed as an optical system in which the light beam is condensed at a position A by the optical transmitter 10 and is received by the optical receiver 20 as shown in Fig. 2.

First, a case is considered where the light beam emitted from the optical transmitter 10 forms an image at the predetermined position A. As the light source 11 of the optical transmitter 10, a VCSEL that emits a basic Gaussian beam with a wavelength of 850 nm (NA = 0.2, a beam diameter of 2.6 µm at the emission end) is assumed. The wavefront of a light beam emitted from the light source 11 is substantially spherical.

As shown in Fig. 2, the light beam from the light source 11 is turned into approximately parallel light (the wavefront of the beam is substantially planar) with a beam diameter of 0.24 mm by the transmission side first lens 12 and then converted into a light beam having a spiral wavefront by the transmission side vortex optical element 14, and the light beam is then condensed at the predetermined position A by the transmission side second lens 13.

The light source 11, the transmission side first lens 12, the transmission side vortex optical element 14, and the transmission side second lens 13 are arranged so as to share the same optical axis. The transmission side vortex optical element 14 exhibits the optical effect most when transmitting a collimated light beam and is therefore arranged between the transmission side first lens 12 and the transmission side second lens 13.

The transmission side first lens 12 and the transmission side second lens 13 are planar-convex (PC) lens with a refractive index n₁ of 1.51, a lens effective diameter D₁ of 0.25 mm, a center thickness CT of 0.5 mm of the material where the shape thereof on the convex side is made to be an aspheric shape optimized to minimize wavefront aberration at a light condensing point when the size R of the radius of curvature in the paraxial region is set to be 0.23 mm and parallel light parallel to the optical axis enters from the surface on the plane side.

The transmission side vortex optical element 14 has a refractive index n₂ of 1.51 and an effective diameter D₂ of 0.25 mm, and the rotation direction of the spiral of light passing through the transmission side vortex optical element 14 is a positive direction. A case where the phase difference Δϕ is 2π and a case where the phase difference Δϕ is 2π×6 are taken into consideration.

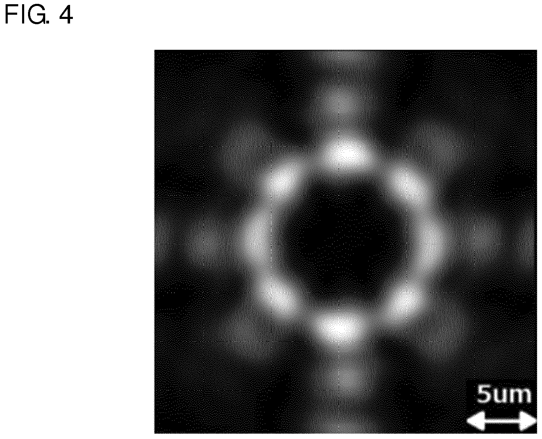

Fig. 3 shows a light intensity distribution when the phase difference Δϕ of the transmission side vortex optical element 14 is 2π. Fig. 4 shows a light intensity distribution when the phase difference Δϕ of the transmission side vortex optical element 14 is 2π×6. These are all light intensity distributions at the position A shown in Fig. 2. As shown in Fig. 3 and Fig. 4, both represent light condensing spots having a ring-shaped light intensity distribution.

The ring diameter of the transmission side vortex optical element 14 shown in Fig. 3 is 6.6 µm when the phase difference Δϕ thereof is 2π. The ring diameter of the transmission side vortex optical element 14 shown in Fig. 4 is 21.7 µm when the phase difference Δϕ thereof is 2π×6. From these, it can be understood that the beam diameter at the time of light condensation becomes larger as the phase difference Δϕ of the transmission side vortex optical element 14 becomes larger.

As described above, the refractive index distribution in the central part of the core of a multimode fiber may be unstable, depending on the manufacturing method, and the instability may cause DMD. Light incident on the central part of the core where the refractive index may be unstable is reduced by providing the transmission side vortex optical element 14 in the optical transmitter 10 and causing a light beam having a ring-shaped light intensity distribution to be incident on the core of the multimode fiber 30. Thus, the generation of DMD is suppressed.

The core diameter of the multimode fiber is generally 50 µm or 62.5 µm. Therefore, in the case of a light beam having a light intensity distribution with a ring diameter of 6.6 µm shown in Fig. 3, the light beam is likely to be affected by the central part of the core of the multimode fiber 30, and it is difficult to suppress the DMD. On the other hand, in the case of a light beam having a light intensity distribution with a ring diameter of 21.7 µm shown in Fig. 4, the light beam is hardly affected by the central part of the core of the multimode fiber 30, and the effect of suppressing the DMD is high. It should be noted that, if the beam diameter of the light beam is made too large, the light beam tends to become coupled to a so-called higher-order propagation mode of the multimode fiber, which causes bending loss, etc., to occur easily.

Next, a case is considered where a light beam having a ring-shaped light intensity distribution condensed at the position A by the optical transmitter 10 forms an image on the light receiving element 21 of the optical receiver 20. As the light receiving element 21, a PD or APD having a light receiving surface diameter of about 10 µm is assumed.

As shown in Fig. 2, the beam diameter of a light beam having a ring-shaped light intensity distribution at the position A is enlarged by the reception side first lens 22. The light beam at this time has a spiral wavefront whose rotation direction is a positive direction due to the action of the optical transmitter 10. The light beam is transmitted through the reception side vortex optical element 24 and then condensed on the light receiving surface of the light receiving element 21 by the reception side second lens 23.

The reception side first lens 22, the reception side vortex optical element 24, the reception side second lens 23, and the light receiving element 21 are arranged so as to share the same optical axis. The reception side vortex optical element 24 exhibits the optical effect most when transmitting a collimated light beam and is therefore arranged between the reception side first lens 22 and the reception side second lens 23. The specifications of the reception side first lens 22 and the reception side second lens 23 are the same as those of the transmission side first lens 12 and the transmission side second lens 13.

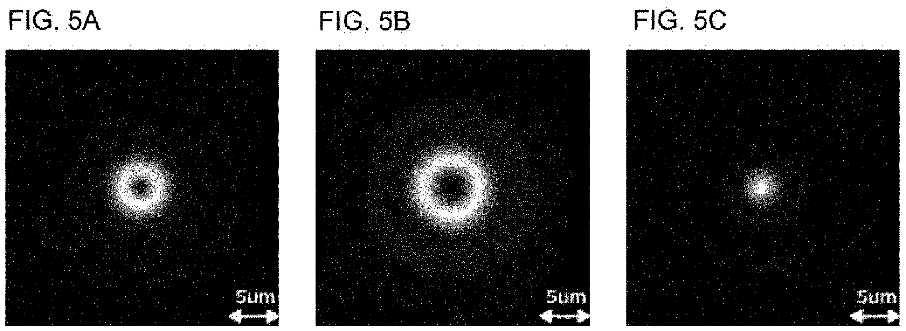

Figs. 5A, 5B and 5C show a light intensity distribution when a light beam having the light intensity distribution shown in Fig. 3 is received by the optical receiver 20. Fig. 3 represents a light intensity distribution when the phase difference Δϕ of the transmission side vortex optical element 14 is 2π.

Fig. 5A shows a light intensity distribution at the light receiving element 21 when the optical receiver 20 is not provided with the reception side vortex optical element 24. Fig. 5B shows a light intensity distribution at the light receiving element 21 when the phase difference Δϕ of the reception side vortex optical element 24 is 2π (i.e., when a phase difference of 2π is given in the same positive direction as in the transmission side vortex optical element 14). Fig. 5C shows a light intensity distribution at the light receiving element 21 when the phase difference Δϕ of the reception side vortex optical element 24 is -2π (i.e., when a phase difference of 2π is given in the negative direction, which is the opposite direction of that for the transmission side vortex optical element 14).

As can be understood from Fig. 5A, when the reception side vortex optical element 24 is not provided, the light intensity distribution at the light receiving element 21 is naturally ring shaped just like the light intensity distribution of a light beam emitted from the optical transmitter 10 (i.e., the light intensity distribution at the position A). In the case of such a ring-shaped light intensity distribution, the light intensity at the center is extremely low, and the amount of light received by the light receiving element 21 is therefore very small.

Further, as can be understood from Fig. 5B, when the phase difference Δϕ of the reception side vortex optical element 24 is 2π, since the phase difference of 2π is further added to the phase difference of 2π given by the transmission side vortex optical element 14, the ring diameter is large being 9.0 µm (the ring diameter is 6.6 µm at position A). Also in this case, the light intensity at the center is extremely low, and the amount of light received by the light receiving element 21 is therefore very small.

Further, as can be understood from Fig. 5C, when the phase difference Δϕ of the reception side vortex optical element 24 is -2π, since the phase difference of 2π given by the transmission side vortex optical element 14 is diminished by the phase difference -2π given by the reception side vortex optical element 24, the beam diameter is 3.6 µm, which is small enough to approximate to the basic Gaussian (the emission mode of the light source 11). In this case, considering that the diameter of the light receiving surface of the light receiving element 21 is approximately 10 µm, the beam diameter can be considered to be suitable for efficiently receiving a light beam.

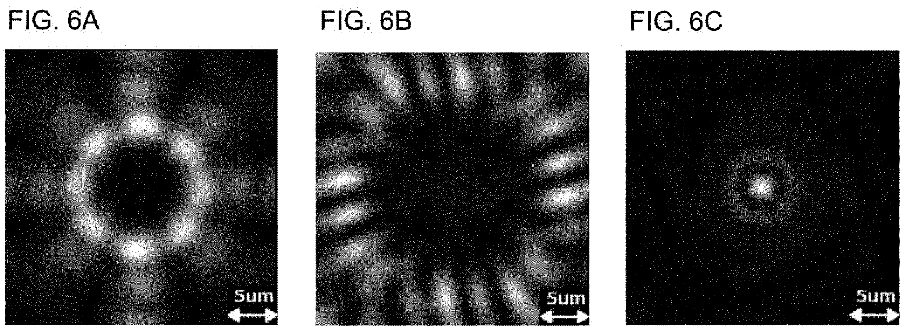

Figs. 6A, 6B and 6C show a light intensity distribution when a light beam having the light intensity distribution shown in Fig. 4 is received by the optical receiver 20. Fig. 4 represents a light intensity distribution when the phase difference Δϕ of the transmission side vortex optical element 14 is 2π×6.

Fig. 6A shows a light intensity distribution at the light receiving element 21 when the optical receiver 20 is not provided with the reception side vortex optical element 24. Fig. 6B shows a light intensity distribution at the light receiving element 21 when the phase difference Δϕ of the reception side vortex optical element 24 is 2π×6 (i.e., when a phase difference of 2π×6 is given in the same positive direction as in the transmission side vortex optical element 14). Fig. 6C shows a light intensity distribution at the light receiving element 21 when the phase difference Δϕ of the reception side vortex optical element 24 is -2π×6 (i.e., when a phase difference of 2π×6 is given in the negative direction, which is the opposite direction of that for the transmission side vortex optical element 14).

As can be understood from Fig. 6A, when the reception side vortex optical element 24 is not provided, the light intensity distribution at the light receiving element 21 is naturally ring shaped just like the light intensity distribution of a light beam emitted from the optical transmitter 10 (i.e., the light intensity distribution at the position A). In the case of such a ring-shaped light intensity distribution, the light intensity at the center is extremely low, and the amount of light received by the light receiving element 21 is therefore very small.

Further, as can be understood from Fig. 6B, when the phase difference Δϕ of the reception side vortex optical element 24 is 2π×6, since the phase difference of 2π×6 is further added to the phase difference of 2π×6 given by the transmission side vortex optical element 14, the light intensity distribution is in a state of being dispersed. Also in this case, the light intensity at the center is extremely low, and the amount of light received by the light receiving element 21 is therefore very small.

Further, as can be understood from Fig. 6C, when the phase difference Δϕ of the reception side vortex optical element 24 is -2π×6, since the phase difference of 2π×6 given by the transmission side vortex optical element 14 is diminished by the phase difference -2π×6 given by the reception side vortex optical element 24, the beam diameter is 3.0 µm, which is small enough to approximate to the basic Gaussian (the emission mode of the light source 11). In this case, considering that the diameter of the light receiving surface of the light receiving element 21 is approximately 10 µm, the beam diameter can be considered to be suitable for efficiently receiving a light beam.

From the result of the above optical simulation, it can be found that both the suppression of the DMD and the improvement in the light receiving efficiency can be achieved when the phase difference of the transmission side vortex optical element 14 is 2π×6 and the phase difference of the reception side vortex optical element 24 is -2π×6. On the other hand, it can be found that although the improvement in the light receiving efficiency for a light beam can be achieved, the effect of suppressing the DMD is limiting when the phase difference of the transmission side vortex optical element 14 is 2π and the phase difference of the reception side vortex optical element 24 is -2π.

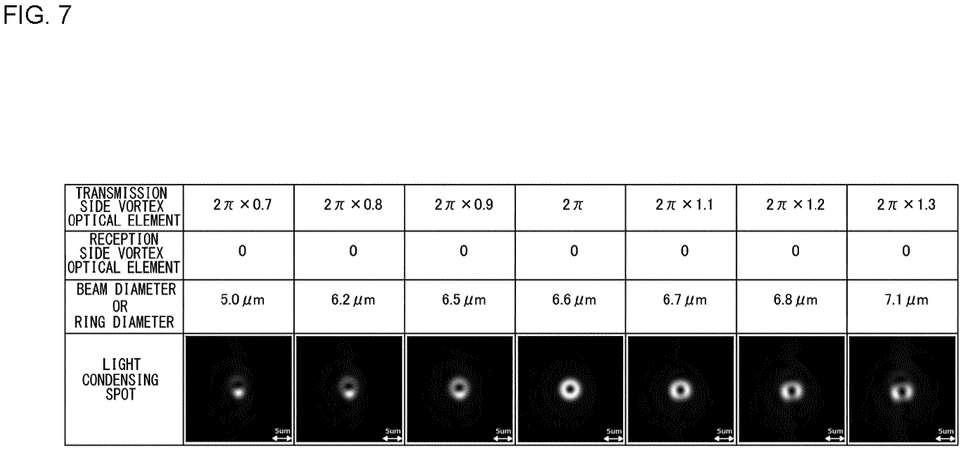

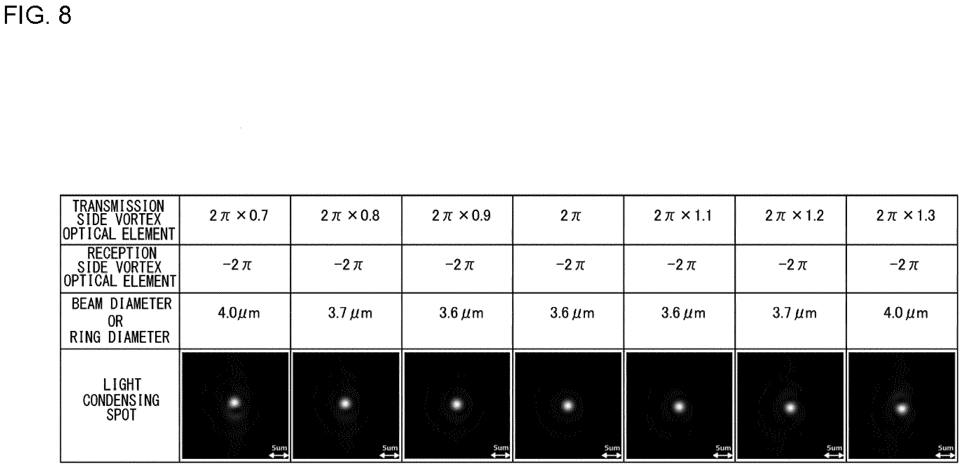

Figs. 7 and 8 show the results of another optical simulation of the optical communication device 100. The condition of this optical simulation is the same as that described in Fig. 2. In this optical simulation, phase differences of 0 and -2π are given by the reception side vortex optical element 24 after the phase difference given by the transmission side vortex optical element 14 is set to be a value that is stepwise and a value that is not an integral multiple of 2π so as to obtain the spot of light condensed at the light receiving element 21.

The condition where the phase difference given by the transmission side vortex optical element 14 is not an integral multiple of 2π means that a light beam given a phase difference of an integral multiple of 2π is emitted from the optical transmitter 10 and propagates in the multimode fiber 30 such that the phase difference of the light beam varies from an integral multiple of 2π due to mode dispersion or the like. Simulation was performed as to how such a light beam whose phase difference varied from an integral multiple of 2π was condensed at the light receiving element 21 by the reception side vortex optical element 24.

Fig. 7 shows light condensing spots that are formed on the light receiving surface of the light receiving element 21 of the optical receiver 20 in which the reception side vortex optical element 24 is not provided, and the ring diameter or the beam diameter thereof when the phase difference given by the transmission side vortex optical element 14 is +2π×η (η = 0.7 to 1.3).

In this case, the light condensing spots formed on the light receiving surface of the light receiving element 21 are in a ring shape. The respective ring diameters of the light condensing spots are 5.0 µm to 7.1 µm, and it is possible to condense light at the light receiving element 21 having a light receiving surface having a diameter of about 10 µm. However, since the light intensity at the center of the light receiving surface, which is relatively stable in performance, is extremely low, the amount of light received by the light receiving element 21 is very small.

Furthermore, when a phase difference of about 2π×6 is given by the transmission side vortex optical element 14 in order to generate a beam with a ring diameter that avoids the center of the multimode fiber 30, the ring diameter of a light condensing spot formed on the light receiving surface of the light receiving element 21 is about two to three times the diameters of 5.0 µm to 7.1 µm. In this case, it is suggested that the amount of light received by the light receiving element 21 is further reduced since part of the light misses the light receiving surface having a diameter of about 10 µm.

Fig. 8 shows light condensing spots that are formed on the light receiving surface of the light receiving element 21 of the optical receiver 20 having the reception side vortex optical element 24 whose phase difference that is given is -2π, and the ring diameter or the beam diameter thereof when the phase difference given by the transmission side vortex optical element 14 is +2π×η (η = 0.7 to 1.3).

In this case, the light condensing spots formed on the light receiving surface of the light receiving element 21 are not in a ring shape and are light condensing spots with high light intensity at the center. The respective beam diameters of the light condensing spots are 3.6 µm to 4.0 µm, which are suitable for condensing light on the light receiving element 21 having a light receiving surface with a diameter of about 10 µm.

Further, when a phase difference of about 2π×6 is given by the transmission side vortex optical element 14, the beam diameter of a light condensing spot formed on the light receiving surface of the light receiving element 21 is about two to three times the diameters of 3.6 µm to 4.0 µm. In this case also, the light receiving element 21 having a light receiving surface with a diameter of about 10 µm can sufficiently receive light.

From the results of the above optical simulation, it can be found that both DMD suppression and improvement in the light beam receiving efficiency can be also achieved by providing the optical transmitter 10 and the optical receiver 20 respectively with vortex optical elements that give phase differences in directions opposite to each other in the case where the mode dispersion or the like of the multimode fiber 30 is taken into consideration.

Described above is an explanation of the present invention based on the embodiments. These embodiments are intended to be illustrative only, and it will be obvious to those skilled in the art that various modifications to constituting elements and processes could be developed and that such modifications are also within the scope of the present invention.

### [DESCRIPTION OF THE REFERENCE NUMERALS]

- 10: optical transmitter,
- 11: light source,
- 12: transmission side first lens,
- 13: transmission side second lens,
- 14: transmission side vortex optical element,
- 20: optical receiver,
- 21: light receiving element,
- 22: reception side first lens,
- 23: reception side second lens,
- 24: reception side vortex optical element,
- 30: multimode fiber,
- 100: optical communication device

### [INDUSTRIAL APPLICABILITY]

The present invention can be applied to an optical communication device in which a multimode fiber is used.

## Claims

1. An optical receiver that receives, through a light receiving element, a light beam having a spiral wavefront propagated through a multimode fiber, comprising a vortex optical element arranged between the multimode fiber and the light receiving element.

2. The optical receiver according to claim 1, wherein
the light beam propagated through the multimode fiber is a light beam having a wavefront rotated spirally in a first direction around the propagation direction, and
the vortex optical element is formed so as to spirally rotate the wavefront of an incident light beam in a second direction that is opposite to the first direction around the propagation direction.

3. The optical receiver according to claim 2, wherein
the light beam propagated through the multimode fiber is a light beam having a wavefront to which a predetermined phase difference is given in the first direction around the propagation direction, and
the vortex optical element is formed so as to give the predetermined phase difference to the wavefront of an incident light beam in the second direction around the propagation direction.

4. An optical communication device comprising:
an optical transmitter that transmits, via a multimode fiber, a light beam emitted from a light source and that includes a transmission side vortex optical element arranged between the light source and the multimode fiber; and
an optical receiver that receives, through a light receiving element, a light beam propagated through the multimode fiber and that includes a reception side vortex optical element arranged between the multimode fiber and the light receiving element.

5. The optical communication device according to claim 4, wherein
the transmission side vortex optical element is formed so as to spirally rotate the wavefront of an incident light beam in a first direction around the propagation direction, and
the reception side vortex optical element is formed so as to spirally rotate the wavefront of an incident light beam in a second direction that is opposite to the first direction around the propagation direction.

6. The optical communication device according to claim 5, wherein
the transmission side vortex optical element is formed so as to give a predetermined phase difference to the wavefront of an incident light beam in the first direction around the propagation direction, and
the reception side vortex optical element is formed so as to give the predetermined phase difference to the wavefront of an incident light beam in the second direction around the propagation direction.
